# FASCICULE DE BREVET EUROPEEN

(11) **EP 0 559 523 B1**
(45) Date de publication et mention de la délivrance du brevet: **14.12.1994**
(21) Numéro de dépôt: 93400477.1
(22) Date de dépôt: 24.02.1993
(51) Int. Cl.: B62D 1/18, F16C 25/04

(54) **Ensemble de colonne de direction réglable en position pour véhicule automobile**
Einstellbare Lenksäuleneinheit für ein Kraftfahrzeug
Adjustable steering column assembly for a motor vehicle

(30) Priorité: 04.03.1992 FR 9202594
(43) Date de publication de la demande: 08.09.1993
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Passebecq, Ghislain, F-25400 Audincourt (FR)
(74) Mandataire: Habasque, Etienne Joel Jean-François

(56) Documents cités:
- EP-A- 0 222 628
- EP-A- 0 427 584
- DE-C- 3 924 015
- GB-A- 2 061 207
- GB-A- 2 245 663

## Description

La présente invention concerne un ensemble de colonne de direction réglable en position pour véhicule automobile.

Certains véhicules automobiles sont munis depuis déjà plusieurs années de dispositifs de réglage de la position du volant, destinés à permettre l'adaptation de la position de celui-ci à la morphologie du conducteur du véhicule.

C'est ainsi que la position de ce volant peut être réglée axialement et/ou angulairement par l'utilisateur.

Le document GB-A-2.061.207 décrit une colonne de direction réglable angulairement selon la première partie de la revendication 1.

Les ensembles de colonne de direction connus dans l'état de la technique, comportent un arbre de direction dont l'une des extrémités porte un volant de direction et dont l'autre extrémité est reliée au reste du mécanisme de direction du véhicule.

Cet arbre de direction est monté déplaçable à rotation dans un corps de colonne par exemple par l'intermédiaire de moyens de guidage en rotation et le corps et/ou l'arbre sont montés déplaçables angulairement et/ou axialement entre des flasques d'une structure de fixation de ce corps sur le reste du véhicule automobile.

Cette structure de fixation comporte à l'une de ses extrémités des moyens de blocage en position du corps et de l'arbre et donc du volant, en position, déplaçables entre une position de verrouillage et une position de déverrouillage, permettant à l'utilisateur de régler la position du volant.

A proximité de l'autre de ses extrémités, cette structure de fixation comporte un palier de guidage du corps de colonne.

Différents modes de réalisation de ces moyens de blocage ont été proposes.

C'est ainsi par exemple que ces moyens de blocage peuvent comporter un tirant s'étendant entre les deux flasques de la structure de fixation, dont une première extrémité est en appui sur l'un des flasques de la structure de fixation et dont la seconde extrémité est reliée à des éléments de blocage permettant de rapprocher les flasques pour bloquer le corps, l'arbre et le volant, en position.

Différentes formes de réalisation de ces éléments de blocage ont également été proposées.

C'est ainsi par exemple, que ces éléments de blocage peuvent être constitués par un système à vis-écrou, un système à genouillère, ou encore un système à excentrique, relié à un levier de manoeuvre actionnable par l'utilisateur.

Un autre mode de réalisation de ces moyens de blocage est décrit dans le document GB-A-2 113 164 au nom de FORD MOTOR COMPANY LIMITED.

Ce document décrit en effet un ensemble de colonne dont la structure générale se présente sous la forme décrite précédemment et dans laquelle les éléments de blocage comprennent un organe de butée à l'extrémité correspondante du tirant, un organe d'appui intermédiaire en contact avec le flasque correspondant de la structure de support et déplaçable axialement sur le tirant et un organe de manoeuvre disposé entre l'organe de butée et l'organe d'appui intermédiaire, relié à un levier de manoeuvre, et déplaçable à rotation dans un plan perpendiculaire au tirant entre une position active de blocage de la colonne et une position escamotée de déblocage de celle-ci.

Les surfaces en regard de l'organe de manoeuvre et de l'organe d'appui intermédiaire ou de l'organe de butée, comprennent l'une, au moins une partie en saillie adaptée pour coopérer avec une rampe de l'autre, pour écarter ces deux surfaces l'une de l'autre et donc les éléments de blocage correspondants afin de rapprocher les flasques pour bloquer la colonne en position, lors du déplacement du levier de manoeuvre.

Différents modes de réalisation du palier de guidage du corps de colonne dans la structure de fixation ont également été développés.

Cependant, ces paliers comportent de manière générale, une portion repliée de la structure, s étendant dans un plan à peu près perpendiculaire aux flasques de celle-ci. Cette portion repliée comporte un évidement dans lequel s'engage le corps de colonne, une bague en matériau élastiquement déformable étant interposée entre les parois de cette portion repliée définissant l'évidement et le corps de colonne, pour permettre à celui-ci de se déplacer angulairement et/ou axialement par rapport à cette portion repliée et donc à la structure de fixation.

On conçoit que ce type de paliers présente un certain nombre d'inconvénients notamment au niveau du maintien en position sans jeu du corps de colonne dans la structure de fixation.

Le but de l'invention est donc de résoudre ces problèmes en proposant un palier de guidage qui soit simple, fiable, et qui permette de monter sans jeu le corps de colonne dans la structure de fixation.

A cet effet, l'invention a pour objet un ensemble de colonne de direction réglable en position pour véhicule automobile, du type comportant un arbre de direction dont l'une des extrémités porte un volant de direction et dont l'autre extrémité est reliée au reste du mécanisme de direction du véhicule, cet arbre étant monté déplaçable à rotation dans un corps de colonne, le corps étant monté déplaçable angulairement et/ou axialement entre deux flasques d'une structure de fixation de ce corps sur le reste du véhicule automobile, cette structure de fixation comportant à l'une de ses extrémités des moyens de blocage en position du corps et de l'arbre, et donc du volant, ces moyens étant déplaçables entre une position de verrouillage et une position de déverrouillage, pour permettre le réglage de la position du volant par l'utilisateur et à proximité de l'autre de ses extrémités, un palier de guidage de ce corps, ledit palier de guidage comportant une portion en forme d'étrier de section générale en U de la structure de fixation, caractérisé en ce que, dans cette portion en forme d'étrier, est disposé un coussinet de montage sans jeu du corps de colonne dans la structure de fixation, les parois latérales opposées du coussinet étant reliées aux flasques de l'étrier et comportant un évidement de réception du corps de colonne.

Avantageusement, les parois latérales opposées du coussinet comprennent des moyens d'articulation sans jeu sur les flasques de l'étrier, permettant un pivotement de ce coussinet dans l'étrier autour d'un axe à peu près perpendiculaire à l'axe du corps de colonne.

Selon un mode de réalisation particulièrement avantageux, il est également prévu des moyens de mise sous contrainte radiale de l'ensemble étrier-coussinet-corps.

L'invention sera mieux comprise à l'aide de la description qui va suivre, donnée uniquement à titre d'exemple et faite en se référant aux dessins annexés, sur lesquels :
- la Fig.1 représente une vue schématique d'un mode de réalisation d'un ensemble de colonne selon l'invention;
- la Fig.2 représente une vue en coupe prise suivant la ligne II-II de la Fig.1; et
- la Fig.3 représente une vue en coupe prise suivant la ligne III-III de la Fig.2.

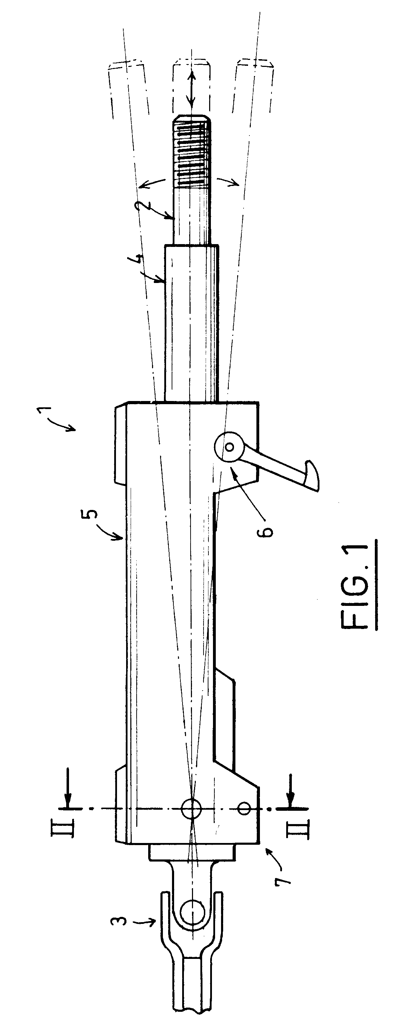

Ainsi qu'on peut le voir sur ces figures, et en particulier sur la Fig.1, un ensemble de colonne de direction pour véhicule automobile, désigné par la référence générale 1, comporte un arbre de direction 2 dont l'une des extrémités est adaptée pour porter un volant de direction et dont l'autre extrémité est reliée au reste du mécanisme de direction du véhicule, désigné par la référence générale 3 sur cette figure.

Cet arbre de direction 2 est monté déplaçable en rotation dans un corps de colonne 4, par l'intermédiaire de moyens de guidage en rotation de type classique.

Plus particulièrement, l'invention se rapporte aux ensembles de colonnes de direction réglables en position et dans ce cas, le corps 4 et/ou l'arbre 2, sont montés déplaçables angulairement et/ou axialement entre deux flasques d'une structure de fixation 5 de ce corps sur le reste du véhicule automobile.

Cette structure de fixation présente en effet de façon connue, une section générale en U entre les flasques de laquelle sont disposés le corps 4 et l'arbre 2.

A l'une de ses extrémités, cette structure de fixation comporte des moyens de blocage en position du corps et de l'arbre et donc du volant, en position.

Ces moyens sont désignés par la référence générale 6 sur la Fig.1 et sont bien connus dans l'état de la technique, comme indiqué précédemment, de sorte que l'on ne les décrira pas plus en détail.

On notera cependant que ces moyens de blocage en position comprennent par exemple un tirant, s'étendant entre les flasques de la structure de fixation, dont l'une des extrémités est en appui sur l'un des flasques et dont l'autre extrémité est reliée à des éléments de blocage du corps et de l'arbre en position par rapprochement des flasques et serrage du corps de colonne entre ceux-ci.

Ces moyens de blocage sont montés déplaçables entre une position de verrouillage et une position de déverrouillage, permettant à l'utilisateur de régler la position angulaire et axiale du volant par l'utilisateur.

Dans le mode de réalisation représenté sur cette figure 1, ces moyens de blocage sont montés déplaçables entre ces deux positions, par déplacement angulaire autour de l'axe du tirant.

Bien entendu, d'autres modes de réalisation de ces moyens de blocage peuvent être envisagés.

A proximité de l'autre de ses extrémités, cette structure de fixation comporte un palier de guidage du corps, désigné par la référence générale 7.

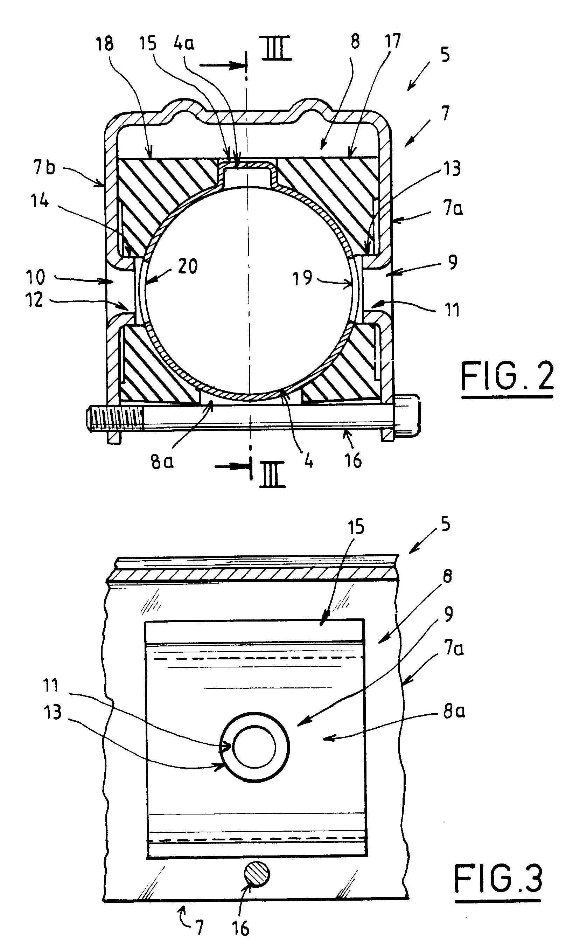

Comme on peut le voir sur les Fig.2 et 3, ce palier de guidage 7 comporte en fait une portion en forme d'étrier de section générale en U de la structure de fixation 5, dans laquelle est disposé un coussinet 8 de montage sans jeu du corps 4 de colonne dans la structure de fixation.

Le corps 4 n'a pas été représenté sur la Fig.3 pour des raisons de clarté.

Les parois latérales opposées de ce coussinet de montage 8, sont reliées aux flasques de l'étrier, désignés par les références 7a et 7b.

Ce coussinet comporte un évidement 8a de réception du corps de colonne.

Avantageusement, les parois latérales opposées du coussinet 8 comportent des moyens 9 et 10 d'articulation sans jeu sur les flasques 7a, 7b de l'étrier, permettant un pivotement de ce coussinet 8 dans l'étrier autour d'un axe à peu près perpendiculaire à l'axe du corps de colonne pour permettre le réglage angulaire de celui-ci dans la structure de fixation.

Ces moyens d'articulation peuvent être constitués comme on peut le voir sur ces figures, par des canons de pivotement désignés par les références générales 11 et 12 sur ces figures, venus de matière avec les flasques 7a et 7b de l'étrier et formés par exemple par fluoperçage, ces canons s'engageant dans des évidements correspondants 13 et 14, des parois latérales du coussinet.

Bien entendu, l'inverse peut également être envisagé, c'est à dire que les parois latérales du coussinet 8 peuvent comporter des parties en saillie s'engageant sans jeu dans des canons de pivotement venus de matière avec les flasques de l'étrier.

On notera également que le corps 4 de colonne de direction est monté coulissant axialement et sans jeu dans l'évidement 8a du coussinet, ce qui permet à l'utilisateur de régler la position axiale du corps et donc du volant.

Le corps et le coussinet comportent également des portions de butée complémentaires permettant un blocage de ce corps en rotation dans l'évidement du coussinet.

Dans l'exemple de réalisation représenté sur la figure 2, le corps 4 comporte une partie en saillie 4a adaptée pour s'engager dans une rainure axiale du coussinet désignée par la référence générale 15 sur cette figure, pour permettre un coulissement axial de ce corps dans ce coussinet, mais bloquer toute rotation de celui-ci.

Ceci est par exemple nécessaire lorsque le corps de colonne est associé à un dispositif antivol comportant un pène s'engageant dans une fente de ce corps, pour empêcher toute rotation de celui-ci, par rapport à la structure de fixation.

Par ailleurs, il est également prévu des moyens de mise sous contrainte radiale de l'ensemble étrier 7 - coussinet 8 - corps de colonne 4.

Dans l'exemple de réalisation représenté sur ces figures, ces moyens de mise sous contrainte comprennent des moyens de rapprochement des flasques de l'étrier, qui comportent par exemple une vis désignée par la référence générale 16 sur ces figures, dont la tête est en appui sur l'un des flasques et dont l'extrémité libre coopère avec un trou taraudé de l'autre flasque pour assurer, lors du serrage, le rapprochement de ces flasques et la mise sous contrainte de l'ensemble mentionné précédemment.

Bien entendu, ces moyens de mise sous contrainte et ces moyens de rapprochement, peuvent se présenter sous différentes formes et peuvent être constitués par exemple par des moyens élastiques, tels qu'un ressort s'étendant entre les deux flasques ou encore une combinaison d'un système à vis-écrou et moyens élastiques.

Ces moyens de mise sous contrainte permettent de réaliser un montage sans jeu du corps dans le coussinet et de ce coussinet dans l'étrier de la structure de fixation pour obtenir un guidage du corps et un confort d'utilisation du volant optimisés.

Bien entendu, différents modes de réalisation de ces moyens de mise sous contrainte peuvent être envisagés.

C'est ainsi par exemple que ce coussinet peut également être formé au moins en partie d'un matériau élastiquement déformable et ce coussinet est alors monté précontraint entre les flasques de l'étrier et le corps de colonne.

Dans ce cas également, il peut être prévu des moyens de maintien de la position relative des flasques comme par exemple un système analogue au système à visécrou 16 représenté sur la Fig.2.

Ce coussinet peut également comporter des lèvres élastiquement déformables en appui par exemple sur le corps de colonne ou sur les flasques et permettant d'obtenir une mise sous contrainte de cet ensemble étrier-coussinet-corps.

Il est également a noter que dans le mode de réalisation représenté sur ces figures, le coussinet de montage comporte deux parties formant mors de montage désignées par les références générales 17 et 18 sur la Fig.2, ces mors s'étendant entre le corps de colonne et les flasques de l'étrier de part et d'autre du corps, pour permettre le montage sans jeu de celui-ci dans l'étrier.

On notera également en regard de la Fig.2, que le corps 4 peut comporter des trous 19 et 20 en regard des canons de pivotement des flasques de l'étrier, permettant par exemple l'introduction d'un outil de blocage de l'ensemble en position lors de son montage sur véhicule.

Enfin, bien que dans l'exemple de réalisation représenté sur la Fig.1, le palier soit disposé à l'extrémité de la structure de fixation la plus proche du reste du mécanisme de direction, il va de soi bien entendu que les positions des moyens de blocage et de ce palier peuvent être inversées et c'est alors les moyens de blocage qui se trouvent à l'extrémité de la structure de fixation la plus proche du reste du mécanisme de direction du véhicule.

## Revendications

1. Ensemble de colonne de direction réglable en position pour véhicule automobile, du type comportant un arbre de direction (2) dont l'une des extrémités porte un volant de direction et dont l'autre extrémité est reliée au reste (3) du mécanisme de direction du véhicule, cet arbre étant monté déplaçable à rotation dans un corps de colonne (4), le corps étant monté déplaçable angulairement et/ou axialement entre deux flasques d'une structure de fixation (5) de ce corps sur le reste du véhicule automobile, cette structure de fixation comportant à l'une de ses extrémités des moyens (6) de blocage en position du corps et de l'arbre, et donc du volant, ces moyens étant déplaçables entre une position de verrouillage et une position de déverrouillage, pour permettre le réglage de la position du volant par l'utilisateur et à proximité de l'autre de ses extrémités, un palier de guidage (7) de ce corps, ledit palier de guidage (7) comportant une portion en forme d'étrier de section générale en U de la structure de fixation (5), caractérisé en ce que, dans cette portion en forme d'étrier, est disposé un coussinet (8) de montage sans jeu du corps (4) de colonne dans la structure de fixation (5), les parois latérales opposées du coussinet étant reliées aux flasques (7a,7b) de l'étrier et comportant un évidement (8a) de réception du corps de colonne.

2. Ensemble selon la revendication 1, caractérisé en ce que les parois opposées du coussinet (8) comprennent des moyens (9,10) d'articulation sans jeu sur les flasques (7a,7b) de l'étrier permettant un pivotement de coussinet (8) dans l'étrier autour d'un axe à peu près perpendiculaire à l'axe du corps de colonne.

3. Ensemble selon la revendication 2, caractérisé en ce que les moyens d'articulation comprennent des canons de pivotement venus de matière avec les flasques de l'étrier dans lesquels s'engagent sans jeu des parties en saillie correspondantes de parois du coussinet.

4. Ensemble selon la revendication 2, caractérisé en ce que les moyens d'articulation comprennent des canons de pivotement (11,12) venus de matière avec les flasques de l'étrier et s'engageant sans jeu dans des évidements correspondants (13,14) des parois du coussinet (8).

5. Ensemble selon l'une quelconque des revendications précédentes, caractérisé en ce que le corps (4) est monté déplaçable axialement et sans jeu dans l'évidement (8a) du coussinet (8).

6. Ensemble selon l'une quelconque des revendications précédentes, caractérisé en ce que le corps (4) et le coussinet (8) comportent des portions de butée complémentaires (4a,15) pour bloquer le corps en rotation dans l'évidement du coussinet.

7. Ensemble selon la revendication 6, caractérisé en ce que le corps (4) comporte une partie en saillie de butée (4a) adaptée pour s'engager dans une rainure axiale (15) du coussinet (8).

8. Ensemble selon l'une quelconque des revendications précédentes, caractérisé en ce qu'il comporte des moyens de mise sous contrainte radiale de l'ensemble étrier (7) - coussinet (8) - corps (4).

9. Ensemble selon la revendication 8, caractérisé en ce que les moyens de mise sous contrainte comprennent des moyens de rapprochement des flasques de l'étrier.

10. Ensemble selon la revendication 8, caractérisé en ce que le coussinet (8) est formé au moins en partie d'un matériau élastiquement déformable et est monté précontraint entre les flasques de l'étrier et le corps de colonne.

11. Ensemble selon la revendication 10, caractérisé en ce qu'il comporte des moyens de maintien de la position relative des flasques.

12. Ensemble selon la revendication 9 ou 11, caractérisé en ce que les moyens de rapprochement ou de maintien de la position relative des flasques comprennent un système à vis-écrou (16).

13. Ensemble selon la revendication 9, 11 ou 12, caractérisé en ce que les moyens de rapprochement ou de maintien de la position relative des flasques comprennent des moyens élastiques.

14. Ensemble selon l'une quelconque des revendications précédentes, caractérisé en ce que le coussinet (8) de montage du corps dans l'étrier, comporte deux parties (17,18) formant mors de montage sans jeu du corps, s'étendant de part et d'autre de celui-ci.

## Claims

1. Steering column unit adjustable in position for an automobile vehicle, of the type comprising a steering shaft (2) having one end which carries a steering wheel and an opposite end which is connected to the rest of the steering mechanism (3) of the vehicle, said shaft being rotatably mounted in a column body (4) - the body being mounted to be angularly and/or axially movable between two flanges of a fixing structure (5) for fixing said body to the rest of the automobile vehicle, said fixing structure having at one of its ends locking means (6) for locking the body and the shaft and therefore the steering wheel in position, said locking means being movable between a locking position and a non-locking position to permit the adjustment of the position of the steering wheel by the user, and said fixing structure having in proximity to the other of its ends, a guide bearing (7) for guiding said body, said guide bearing comprising a yoke-shaped portion of the fixing structure (5) having a generally U-shaped cross-section, characterized in that, in the yoke-shaped portion is disposed a bushing (8) for mounting the column body (4) in the fixing structure (5) without play, the opposite lateral walls of the bushing being connected to the flanges (7a, 7b) of the yoke, the bushing comprising an opening (8a) for receiving the column body.

2. Unit according to claim 1, characterised in that the opposite walls of the bushing (8) include means (9, 10) for articulating it without play to the flanges (7a, 7b) of the yoke, allowing a pivoting of the bushing (8) in the yoke about an axis roughly perpendicular to the axis of the column body.

3. Unit according to claim 2, characterised in that the articulation means comprise pivot trunnions integral with the flanges of the yoke, in which are engaged without play corresponding projecting portions of the walls of the bushing.

4. Unit according to claim 2, characterised in that the articulation means comprise pivot trunnions (11, 12) integral with the flanges of the yoke and engaged without play in corresponding openings (13, 14) of the walls of the bushing (8).

5. Unit according to any one of the preceding claims, characterised in that the body (4) is axially movably mounted without play in the opening (8a) of the bushing (8).

6. Unit according to any one of the preceding claims, characterised in that the body (4) and the bushing (8) have complementary abutment portions (4a, 15) for locking the body in rotation in the opening of the bushing.

7. Unit according to claim 6, characterized in that the body (4) has a projecting stop portion (4a) adapted to engage in an axial groove (15) in the bushing (8).

8. Unit according to any one of the preceding claims, characterised in that it comprises means for putting the assembly comprising the yoke (7), the bushing (8) and the body (4) under radial stress.

9. Unit according to claim 8, characterized in that the means for putting the assembly under stress comprise means for bringing the flanges of the yoke toward each other.

10. Unit according to claim 8, characterised in that the bushing (8) is formed at least partly from an elastically deformable material and is mounted in a prestressed condition between the flanges of the yoke and the column body.

11. Unit according to claim 10, characterised in that it comprises means for maintaining the relative position of the flanges.

12. Unit according to claim 9 or 11, characterized in that the means for bringing the flanges together or for maintaining the relative position of the flanges comprise a screw-nut system (16).

13. Unit according to claim 9, 11 or 12, characterized in that the means for bringing the flanges together or for maintaining the relative position of the flanges comprise resilient means.

14. Unit according to any one of the preceding claims, characterised in that the bushing (8) for mounting the body in the yoke comprises two parts (17, 18) forming jaws for mounting the body without play, extending on either side of said body.

## Patentansprüche

1. Einstellbare Lenksäuleneinheit für ein Kraftfahrzeug mit einer Lenkwelle (2), die an einem ihrer Enden ein Steuerrad trägt, während das andere Ende der Welle mit dem Rest (3) des Lenkmechanismus des Kraftfahrzeuge verbunden ist, wobei diese Welle drehbar in einem Säulenkörper (4) gelagert ist, und dieser Körper winklig und/oder axial verschiebbar zwischen zwei Flanschen einer Befestigungsstruktur (5) dieses Körpers aufgenommen ist, und diese Befestigungsstruktur an einem ihrer Enden Mittel (6) für die Blockierung der Position des Körpers und der Welle und damit des Steuerrades aufweist, wobei diese Mittel zwischen einer Verriegelungsstellung und einer Entriegelungsstellung verschiebbar sind, um eine Regulierung der Position des Steuerrades durch den Fahrer zu ermöglichen, und wobei in der Nähe des anderen Endstückes ein Führungslager (7) für den Körper vorgesehen ist, und dieses Führungslager (7) einen Abschnitt in Form eines Bügels mit einem weitgehend U-förmigen Querschnitt der Befestigungsstruktur (5) aufweist,
**dadurch gekennzeichnet**, **daß**
in diesem bügelförmigen Abschnitt eine Lagerbüchse (8) für die spielfreie Montage des Säulenkörpers (4) in der Befestigungsstruktur (5) vorgesehen ist, wobei die gegenüberliegenden Seitenwände mit den Flanschen (7a, 7b) des Bügels verbunden sind und eine Aussparung (8a) für die Aufnahme des Säulenkörpers aufweisen.

2. Einstellbare Lenksäuleneinheit nach Anspruch 1,
**dadurch gekennzeichnet**, **daß**
die gegenüberliegenden Wände der Lagerbüchse (8) Mittel (9, 10) für die spielfreie Anlenkung des Bügels an den Flanschen (7a, 7b) aufweisen, die ein Schwenken der Lagerbüchse (8) in dem Bügel um eine Achse erlauben, die in etwa rechtwinklig zur Achse des Säulenkörpers verläuft.

3. Einstellbare Lenksäuleneinheit nach Anspruch 2,
**dadurch gekennzeichnet**, **daß**
die Anlenkmittel Schwenkbuchsen aufweisen, die einstückig mit den Flanschen des Bügels ausgebildet sind, und in die die entsprechenden hervorstehenden Teile der Wände der Lagerbüchse spielfrei eingreifen.

4. Einstellbare Lenksäuleneinheit nach Anspruch 2,
**dadurch gekennzeichnet**, **daß**
die Anlenkungsmittel Schwenkbuchsen (11, 12) aufweisen, die einstückig mit den Flanschen des Bügels ausgebildet sind und spielfrei in entsprechende Aussparungen (13, 14) in den Wänden der Lagerbüchse (8) eingreifen.

5. Einstellbare Lenksäuleneiheit nach einem der vorausgegangenen Ansprüche,
**dadurch gekennzeichnet**, **daß**
der Körper (4) axial verschiebbbar und spielfrei in der Aussparung (8a) der Lagerbüchse (8) montiert ist.

6. Einstellbare Lenksäuleneinheit nach einem der vorausgegangenen Ansprüche,
**dadurch gekennzeichnet**, **daß**
der Körper (4) und die Lagerbüchse (8) komplementäre Anschlagflächen (4a, 15) aufweisen, um den Körper drehfest in der Aussparung der Lagerbüchse zu blockieren.

7. Einstellbare Lenksäuleneinheit nach Anspruch 6,
**dadurch gekennzeichnet**, **daß**
der Körper (4) einen vorspringenden Anschlag (4a) aufweist, der in eine axiale Nut (15) in der Lagerbüchse (8) eingreift.

8. Einstellbare Lenksäuleneinheit nach einem der vorausgegangenen Ansprüche,
**dadurch gekennzeichnet**, **daß**
sie Mittel für den Aufbau einer radialen Vorspannung in dem Zusammenbau aus Bügel (7), Lagerbüchse (8) und Körper (4) aufweist.

9. Einstellbare Lenksäuleneinheit nach Anspruch 8,
**dadurch gekennzeichnet**, **daß**
die Vorspannmittel Mittel für die Annäherung zwischen den Flanschen und dem Bügel enthalten.

10. Einstellbare Lenksäuleneinheit nach Anspruch 8,
**dadurch gekennzeichnet**, **daß**
die Lagerbüchse (8) mindestens teilweise aus einem elastisch verformbaren Material hergestellt ist und in vorgespanntem Zustand zwischen den Flanschen des Bügels und dem Säulenkörper montiert ist.

11. Einstellbare Lenksäuleneinheit nach Anspruch 10,
**dadurch gekennzeichnet**, **daß**
sie Mittel für die Einhaltung der relativen Position der Flansche enthält.

12. Einstellbare Lenksäuleneinheit nach einem der Ansprüche 9 oder 11,
**dadurch gekennzeichnet**, **daß**
die Mittel für die Annäherung oder die Einhaltung der relativen Position der Flansche ein System aus Schrauben und Muttern (16) enthalten.

13. Einstellbare Lenksäuleneinheit nach einem der Ansprüche 9, 11 oder 12,
**dadurch gekennzeichnet**, **daß**
die Mittel für die Annäherung oder die Einhaltung der relativen Position der Flansche elastische Mittel aufweisen.

14. Einstellbare Lenksäuleneinheit nach einem der vorausgegangenen Ansprüche,
**dadurch gekennzeichnet**, **daß**
die Lagerbüchse (8) für die Montage des Körpers in dem Bügel zwei Abschnitte (17, 18) aufweist, welche eine Spannbacke für die spielfreie Montage des Körpers bilden und sich an beiden Seiten des Körpers erstrecken.
